Europäisches Patentamt

**European Patent Office**

**Office européen des brevets**

(19)

(11) Numéro de publication: **0 009 750**
**B1**

(12) **FASCICULE DE BREVET EUROPEEN**

(45) Date de publication du fascicule du brevet: **28.03.84**

(51) Int. Cl.³: **B 23 P 19/06**

(21) Numéro de dépôt: **79103623.9**

(22) Date de dépôt: **24.09.79**

(54) **Dispositif automatique de vissage ou de dévissage d'un écrou de mise sous tension sur un goujon de fixation et procédé de mise en oeuvre.**

(30) Priorité: **26.09.78 FR 7827549**

(43) Date de publication de la demande:
**16.04.80 Bulletin 80/8**

(45) Mention de la délivrance du brevet:
**28.03.84 Bulletin 84/13**

(84) Etats contractants désignés:
**AT BE CH DE GB IT NL SE**

(56) Documents cités:
**FR - A - 1 321 826**

(73) Titulaire: SKF COMPAGNIE D'APPLICATIONS MECANIQUES & CIE (Nom commercial: COMPAGNIE DES ACIERS, OUTILLAGES ET EQUIPEMENT INDUSTRIELS)
1, Avenue Newton
F-92142 Clamart (FR)
Titulaire: ETAT-FRANCAIS représenté par le DELEGUE GENERAL POUR L'ARMEMENT Bureau des Brevets et Inventions de la Délégation Générale pour l'Armement 14, rue Saint-Dominique
F-75997 Paris Armées (FR)

(72) Inventeur: Boudet, Georges
130 Rue du Bocage St- Cyr-sur-Loire
F-37100 Tours (FR)
Inventeur: Gibert, Pierre
46 Boulevard de la Gespe
F-65000 Tarbes (FR)

(74) Mandataire: Casalonga, Alain et al,
BUREAU D.A. CASALONGA OFFICE JOSSE & PETIT Baaderstrasse 12-14
D-8000 München 5 (DE)

Courier Press, Leamington Spa, England.

## Dispositif automatique de vissage ou de dévissage d'un écrou de mise sous tension sur un goujon de fixation et procédé de mise en oeuvre

La présente invention a pour objet un dispositif automatique de vissage ou de dévissage d'un écrou supérieur de mise sous tension sur un goujon et en particulier d'un écrou supérieur de mise sous tension d'un goujon de fixation du couvercle d'une cuve de réacteur nucléaire.

Dans certaines applications, des boulons ou goujons de grandes dimensions doivent faire l'objet d'une mise sous tension préalable, en général au moyen de dispositifs tendeurs hydrauliques, afin d'être mieux à même de résister aux contraintes auxquelles ils se trouvent soumis en fonctionnement normal. C'est le cas en particulier dans l'industrie nucléaire pour les goujons de fixation du couvercle de cuves de réacteurs.

Compte tenu du grand nombre de goujons employés et des radiations dangereuses auxquelles peuvent être soumis les opérateurs, il est important d'accélérer au maximum les diverses opérations de mise en place, de mise sous prétension et de retrait des goujons en vue de la fermeture et de l'ouverture du couvercle de cuve qui sont rendues périodiquement nécessaires lors du changement des éléments combustibles.

On a déjà prévu des ensembles de manutention et de mise sous tension simultanée de goujons de ce type tels que décrit par exemple dans la demande de brevet français 2.329.414 ou dans la demande de brevet français 2.294.795. Dans de tels dispositifs, on utilise pour chaque goujon un tendeur hydraulique dont le dernier étage vient prendre appui sur un écrou supérieur de mise sous tension du goujon. Dans les dispositifs connus tels que décrits par exemple dans le certificat d'utilité français 2.208.756 ou dans la demande de brevet français 2.294.795 la rotation de cet écrou supérieur se fait au moyen d'un pignon denté latéral qui vient coopérer avec une denture axiale pratiquée sur la périphérie externe de l'écrou supérieur. Lors des opérations de vissage et de dévissage de cet écrou il n'est cependant pas prévu de compenser le poids du goujon de sorte que celui-ci, qui peut être considérable compte tenu de la taille importante de ces goujons, s'exerce intégralement sur les parties filetées de l'écrou supérieur de mise sous tension et de la tête du goujon.

La présente invention a pour objet un dispositif automatique de vissage d'un tel écrou qui permette de faciliter les opérations de vissage et de dévissage de l'écrou de mise sous tension en évitant tout effort sur le filetage de l'écrou. L'invention a également pour objet un dispositif qui permette d'obtenir un dévissage automatique de l'écrou de mise sous tension lors du vissage du goujon pour sa mise en place.

Le dispositif automatique de vissage ou de dévissage d'un écrou supérieur de mise sous tension sur un goujon de fixation, en particulier de mise sous tension d'un goujon de fixation du couvercle d'une cuve de réacteur nucléaire, agit sur la périphérie externe de l'écrou et comprend, selon l'invention, des moyens de blocage en rotation et de support du goujon permettant de compenser le poids du goujon lors du vissage ou du dévissage de l'écrou et au moins un galet d'entraînement de l'écrou, ce galet pouvant être entraîné en rotation et étant muni sur sa périphérie de gorges cylindriques de même pas et de même profil qu'un filetage pratiqué à la périphérie externe de l'écrou. Le galet d'entraînement est monté de manière à pouvoir se déplacer par rapport à l'écrou pour entrer en contact avec sa périphérie ou s'en éloigner.

Dans un mode de réalisation préféré du dispositif de l'invention, ce dernier comprend deux galets d'entraînement diamètralement opposés par rapport à l'écrou et montés sur des leviers ou bras articulés pivotant autour d'axes solidaires du bâti du dispositif sous l'action d'un vérin pneumatique relié aux extrémités desdits leviers, opposées à celles qui portent les galets d'entraînement. Les deux galets d'entraînement sont entraînés en rotation dans le même sens par l'intermédiaire de deux liens souples tels que des courroies crantées, passant chacun respectivement sur une poulie montée sur l'axe de pivotement du levier portant le galet d'entraînement correspondant. Dans un mode de réalisation préféré, le dispositif comprend en outre des moyens permettant de freiner en rotation les galets d'entraînement de façon à assurer un dévissage automatique de l'écrou supérieur de mise sous tension lors de l'opération de vissage du goujon. L'entraînement des galets se fait de préférence au moyen d'un motoréducteur muni d'un frein de façon à assurer, par ce moyen unique, les deux fonctions de vissage et de dévissage de l'écrou supérieur.

Les moyens de blocage et de support du goujon comprennent avantageusement une broche dont l'extrémité porte un dispositif de préhension coopérant avec la tête du goujon. Les moyens de blocage peuvent être constitués par une portion cannelée coopérant avec des cannelures correspondantes pratiquées sur la tête du goujon. A titre d'exemple on pourra utiliser un dispositif de préhension du type à billes pouvant être déplacées radialement vers l'extérieur de façon à coopérer avec une gorge interne de la tête du goujon.

De cette manière lors des opérations de vissage et de dévissage de l'écrou supérieur de mise sous tension, le poids du goujon se trouve intégralement compensé par les moyens de support. Le goujon est d'autre part maintenu fixe en rotation par les moyens de blocage tels que les cannelures précitées.

L'écrou destiné à être vissé sur un goujon et adapté pour coopérer avec le dispositif automatique de vissage selon l'invention présente avantageusement une structure un peu particulière. Il comprend en effet une jupe cylindrique supérieure de diamètre interne supérieur au diamètre externe de la tête du goujon et munie d'un filetage sur toute la hauteur de sa périphérie extérieure. Ce filetage est destiné à coopérer avec les gorges cylindriques des galets d'entraînement du dispositif automatique de vissage de l'invention. L'écrou comprend en outre une partie inférieure muni d'un filetage interne de même pas que le filetage extérieur de la jupe et destiné à coopérer avec une portion filetée de la tête du goujon.

L'invention sera mieux comprise à l'étude d'un mode de réalisation particulier décrit à titre nullement limitatif et illustré par les dessins sur lesquels:

la fig. 1 représente une vue en élévation partiellement en coupe des éléments essentiels d'un dispositif automatique de vissage selon l'invention, l'écrou supérieur de mise sous tension étant représenté en position complètement vissée sur la portion filetée de la tête du goujon;

la fig. 2 est une vue partielle de dessus du dispositif automatique de vissage de la fig. 1 en coupe selon II—II de la fig. 1.

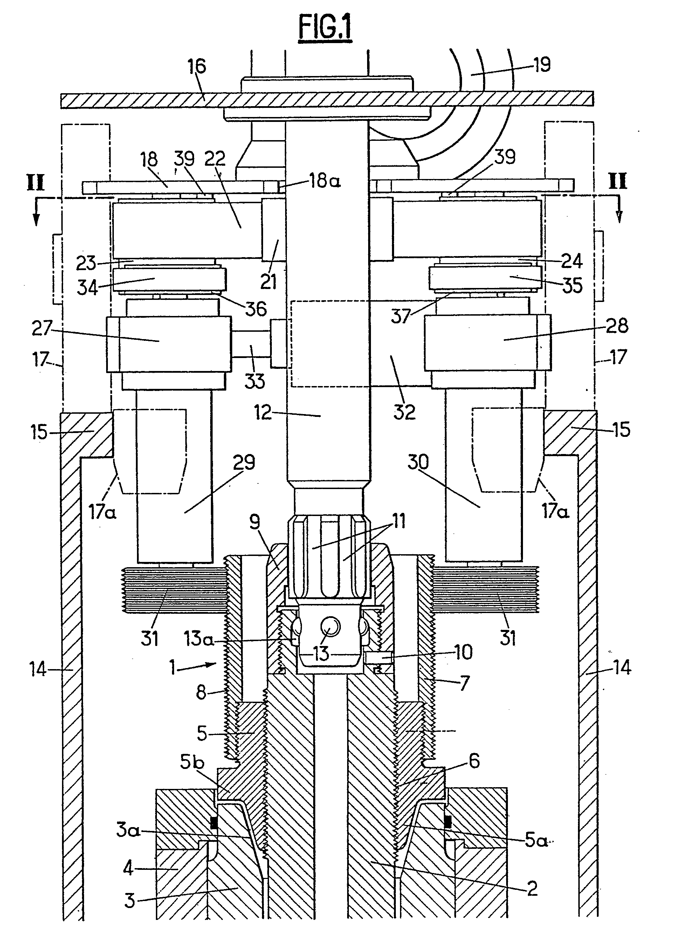

Le dispositif automatique de vissage représenté sur les figures est destiné à coopérer avec un écrou supérieur 1 permettant la mise sous tension d'un goujon 2 de fixation du couvercle d'une cuve de réacteur nucléaire non représentée sur les figures. On voit sur la fig. 1 une partie du piston 3 de l'étage supérieur d'un tendeur hydraulique, lequel piston 3 peut se déplacer à l'intérieur d'une chemise 4 sous l'action d'un fluide hydraulique alimenté par des moyens non représentés sur la figure. On pourra par exemple se reporter à la demande de brevet français 2.329.414 pour plus de précisions sur la structure d'un tendeur hydraulique qui peut être utilisé pour mettre sous tension un tel goujon. On notera que le piston 3 présente une portion supérieure interne conique 3a coopérant avec une forme conique correspondante 5a de la partie inférieure 5 de l'écrou 1. Cette partie inférieure 5 est par ailleurs munie d'un filetage interne coopérant avec une portion filetée 6 de la tête du goujon 2. L'écrou supérieur de mise sous tension 1 comprend en outre une jupe cylindrique supérieure 7 qui est vissée et goupillée sur la partie inférieure 5 et dont le diamètre interne est supérieur au diamètre externe de la tête du goujon 2. La jupe cylindrique supérieure 7 présente sur toute sa hauteur un filetage externe 8 qui permet, comme on le verra, le vissage et le dévissage de l'écrou supérieur 1.

La tête du goujon 2 comporte une extrémité 9 vissée sur la tête du goujon et maintenue par une goupille 10. La périphérie externe cylindrique de l'extrémité 9 est exempte de filetage et sert, comme on le verra, de surface de maintien de l'écrou supérieur 1 lorsque celui-ci est complétement dévissé du filetage 6 du goujon 2. L'extrémité 9 de la tête du goujon comporte une surface interne cannelée qui coopère avec des cannelures 11 pratiquées dans une portion extrême de la broche 12 d'un dispositif de vissage du goujon non représenté sur les figures. Ces cannelures 11 constituent donc un moyen de blocage en rotation du goujon 2 lors de l'opération de vissage de l'écrou supérieur 1. Bien entendu les mêmes cannelures servent en outre à procéder au vissage et au dévissage du goujon 2 proprement dit après sa mise en place ou lors de son retrait sur le couvercle de la cuve du réacteur.

La tête du goujon 2 comporte en outre une gorge interne 13a coopérant avec des billes 13 d'un dispositif de préhension à billes logé dans l'extrémité de la broche 12. Ce dispositif de préhension, d'un type connu en soi, comporte des moyens de commande internes susceptibles de provoquer un déplacement radial vers l'extérieur des billes 13 qui viennent alors se loger à l'intérieur de la gorge de blocage 13a de façon à solidariser en translation axiale le goujon 2 et la broche 12 de la visseuse. Les moyens de commande peuvent être actionnés automatiquement de façon à faire coopérer les billes 13 avec ladite gorge de blocage ou au contraire à libérer le goujon 2. Le dispositif de préhension ainsi décrit joue donc le rôle d'un moyen de support pour le goujon 2 qui est maintenu suspendu par la broche 12 de la visseuse laquelle se trouve dans l'axe du goujon 2.

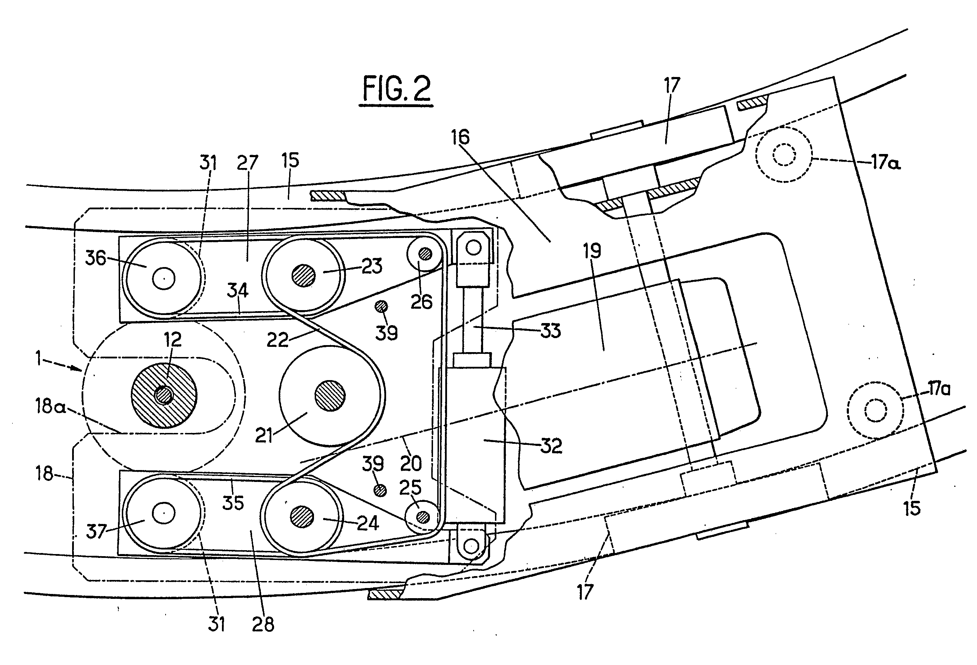

L'ensemble du dispositif tendeur hydraulique, dont seul le piston 3 de l'étage supérieur est visible sur la fig. 1, repose par l'intermédiaire d'une pièce de soutien sur le couvercle de la cuve du réacteur non représentée. Cette pièce de soutien, non représentée sur les figures, présente une forme de couronne circulaire entourant le couvercle de la cuve. Deux couronnes circulaires 14 affectant sensiblement un profil en forme de C entourent également la cuve du réacteur et sont disposées l'une à l'intérieur et l'autre à l'extérieur des tendeurs hydrauliques. Les rebords horizontaux supérieurs 15 des deux couronnes 14 servent de chemin de roulement pour le bâti 16 du dispositif automatique de vissage de l'invention, lequel peut donc se déplacer tout autour de la cuve du réacteur par l'intermédiaire de quatre roulettes 17 dont deux sont visibles sur la fig. 2 et qui sont représentées en trait mixte sur la fig. 1 de façon à montrer la manière dont elles roulent sur les rebords 15. L'une des roulettes 17 peut par exemple être entraînée en rotation par un moteur. L'ensemble est maintenu convenablement en position sur les rebords 15 par des galets fous 17a dont deux sont visibles sur la fig. 2 et qui sont représentés en trait mixte sur la fig. 1. Ces galets entrent en contact avec la face interne du rebord 15 jouant le rôle de chemin de roulement. Ils comportent en outre un chanfrein permettant de faciliter la descente de l'ensemble du dispositif de vissage de l'invention supportant le goùjon 2 par l'intermédiaire du dispositif de préhension à billes 13, entre les deux couronnes concentriques 14, lors de la mise en place du goujon 2.

Le dispositif automatique de vissage de l'invention est monté sur une platine support 18 solidaire du bâti mobile 16 lequel reçoit par ailleurs les organes de commande nécessaires et l'ensemble du dispositif de vissage et dévissage du goujon proprement dit dont fait partie la broche 12. La platine-support 18 comporte une échancrure oblongue 18a comme on peut le voir en particulier sur la fig. 2 afin de laisser passage à la broche 12. Sur la platine 18 se trouve monté un groupe moto-réducteur frein 19 entraînant une vis tangente représentée schématiquement par son axe 20 sur la fig. 2 qui coopère avec un pignon denté non représenté sur la figure, entraînant en rotation une poulie crantée 21 montée sous la platine-support 18. Une courroie 22 crantée sur ses deux faces passe sur la poulie crantée 21 du côté opposé à la broche 12 comme on peut le voir sur les figures et entraîne en rotation dans le même sens deux poulies crantées 23 et 24 disposées de chaque côté de la poulie crantée centrale 21 en positions sensiblement diamétralement opposées par rapport à ladite poulie 21. La courroie 22 passe en outre sur un galet cranté fixe 25 et un galet cranté tendeur 26 dont l'axe peut être déplacé afin de tendre la courroie 22. Grâce à cette disposition les poulies crantées 23 et 24 tournent donc dans le même sens. Les axes des poulies crantées 23 et 24 solidaires de la platine-support 18 se prolongent vers le bas c'est-à-dire en direction du goujon 2 et servent de pivot à deux bras articulés 27 et 28 venant encadrer la broche 12 de la visseuse par l'une de leurs extrémités. Ces mêmes extrémités portent des colonnes verticales 29 et 30 munies chacune d'un galet d'entraînement 31 présentant sur sa périphérie une pluralité de gorges cylindriques de même pas et de même profil que le filetage externe 8 de la jupe 7 de l'écrou supérieur de mise sous tension 1. Les galets 31 comportent avantageusement un revêtement externe de polyuréthane afin de limiter l'usure du filetage 8. Les galets d'entraînement 31 sont disposés sensiblement diamétralement opposés par rapport à l'écrou 1.

Les extrémités des deux bras 27 et 28 opposées aux extrémités supportant les colonnes 29 et 30 sont reliées entre elles par l'intermédiaire d'un vérin 32. La tige 33 du vérin 32 est reliée par un axe à l'extrémite du bras 27 tandis que le cylindre du vérin 32 est fixé par un autre axe sur l'extrémité du bras 28. De cette manière l'action du vérin 32 permet de provoquer un pivotement des bras 27 et 28 autour des axes fixes des poulies crantées 23 et 24 ce qui entraîne un rapprochement ou un éloignement des galets d'entraînement 31 par rapport à la périphérie externe de l'écrou 1. Deux butées 39 solidaires de la platine-support 18 limitent le mouvement des bras 27 et 28 assurant ainsi une ouverture symétrique par rapport à l'axe de l'écrou 1.

La partie basse des poulies crantées 23 et 24 coopère avec d'autres courroies crantées 34 et 35 entraînant en rotation les colonnes 29 et 30 par l'intermédiaire de poulies crantées 36 et 37 montées sur l'extrémité des bras 27 et 28 en regard de l'écrou 1.

Les différents mouvements des organes de la machine sont bien entendu contrôlés par différents détecteurs de proximité non représentés sur la figure afin de permettre un fonctionnement entièrement automatique.

On va maintenant décrire le fonctionnement du dispositif automatique de l'invention lors d'un opération de mise en place d'un goujon sur un couvercle de cuve de réacteur nucléaire.

Dans une première phase de manutention des goujons, une couronne circulaire portant l'ensemble des dispositifs tendeurs hydrauliques et leurs écrous de mise sous tension est supportée par un palonnier et chaque goujon est successivement transporté et introduit par le bas dans le dispositif tendeur hydraulique correspondant. Lors de cette opération, l'écrou supérieur de mise sous tension 1 qui reposait par sa collerette radiale 5b et sa partie conique 5a sur le piston 3 de l'étage supérieur de chaque tendeur hydraulique, vient coiffer l'extrémité 9 de la tête de chaque goujon 2. Le dispositif automatique de l'invention est alors déplacé automatiquement sur les couronnes 14 par l'intermédiaire de ses roues 17 dont l'une est motrice jusque dans une position où la broche 12 de la visseuse se trouve dans l'axe du goujon 2. La broche 12 est alors déplacée axialement par des moyens non représentés sur les figures jusqu'à ce que le dispositif de préhension à billes soit en position convenable par rapport à la gorge interne 13a de la tête du goujon 2. Le dispositif de préhension est actionné, le goujon 2 se trouvant alors supporté par la broche 12. Le vérin pneumatique 32 est mis sous pression ce qui provoque le pivotement des deux bras 27 et 28 autour des axes des poulies crantées 23 et 24 jusqu'à ce que les galets d'entraînement 31 entrent en contact avec la périphérie filetée 8 de la jupe 7 de l'écrou 1. Le moto-réducteur 19 est mis en route provoquant ainsi par l'intermédiaire des différentes courroies d'entraînement 22, 34 et 35 la rotation dans le même sens des galets d'entraînement 31 et le vissage de l'écrou supérieur 1 sur la portion filetée 6 du goujon 2 grâce à l'égalité du pas entre le filetage interne de la partie inférieure 5 et le filetage externe de la jupe 7 de l'écrou 1. Il y a lieu de noter que ce vissage est rendu possible par l'existence des cannelures 11 qui bloquent la rotation du goujon 2 pendant l'opération de vissage.

Lorsque l'écrou supérieur 1 est complétement vissé, les galets 31 sont écartés par le vérin 32. Il devient possible de retirer la broche 12 en dégageant le dispositif de préhension à billes 13, le goujon 2 restant supporté par l'intermédiaire de l'écrou supérieur 1 entrant en contact par sa collerette 5b avec le piston 3 de l'étage supérieur du tendeur hydraulique. Cette opération est répétée pour l'ensemble des goujons qui se trouvent finalement tous supportés par leur écrou supérieur de mise sous tension.

La couronne constituée par l'ensemble des tendeurs hydrauliques chacun portant son goujon est ensuite déplacée par l'intermédiaire du palonnier précité jusqu'à venir au-dessus de la cuve du réacteur puis descendue jusqu'à ce que les extrémités des goujons viennent en contact avec les taraudages pratiqués dans la périphérie de la cuve.

Dans cette position, le dispositif automatique de l'invention est de nouveau déplacé au-dessus de chaque goujon afin de procéder au vissage du goujon dans la cuve. Pour cette opération la broche 12 est à nouveau descendue et le dispositif de préhension à billes 13 actionné de façon à solidariser l'extrémité de la broche 12 avec la tête du goujon 2. Les galets d'entraînement 31 sont à nouveau déplacés jusqu'au contact avec l'écrou supérieur 1. Pendant le vissage du goujon 2 dans la cuve par la rotation de la broche 12, les deux galets d'entraînement 31 sont maintenus en contact avec l'écrou supérieur 1, le couple de freinage du moto-réducteur 19 empêchant l'écrou 1 de tourner de sorte que ce dernier se dévisse, le filetage de la partie du goujon implantée dans la cuve ayant le même pas que la partie du goujon coopérant avec l'écour supérieur. De cette manière le vissage du goujon 2 n'est pas contrarié par un éventuel frottement de l'écrou supérieur 1 sur le piston 3 du tendeur hydraulique. On notera que pendant cette opération de vissage du goujon et de dévissage de l'écrou supérieur, le goujon est entièrement supporté par la broche 12 par l'intermédiaire du dispositif de préhension à billes 13.

Lorsque le vissage du goujon est terminé, l'écrou supérieur 1 se trouve entièrement dévissé et il reste maintenu par la périphérie externe lisse c'est-à-dire dénuée de tout filetage de la partie extrême 9 de la tête du goujon 2. Les galets d'entraînement 31 restant en contact avec la périphérie externe filetée de la jupe 7, le moto-réducteur 19 est mis sous tension provoquant comme il a été expliqué précédemment la rotation des galets d'entraînement 31 et le revissage de l'écrou supérieur 1. Celui-ci est vissé jusqu'à une position dans laquelle il ne vient pas complètement en appui sur le piston 3 du tendeur hydraulique un certain jeu étant maintenu pour éviter de forcer les filets de l'écrou et du goujon. Les galets 31 peuvent finalement être écartés et le dispositif de préhension dégagé.

Cette succession d'opérations est répétée pour chaque goujon tous les dispositifs tendeurs hydrauliques sont ensuite actionnés simultanément de façon à mettre sous tension tous les goujons 2 avant de visser les écrous de serrage sur le couvercle de cuve. Après le serrage des écrous inférieurs, les écrous supérieurs de mise sous tension 1 sont successivement dévissés au moyen du dispositif automatique de l'invention. Lorsque l'ensemble des tendeurs hydrauliques est retiré de la cuve, les différents écrous supérieurs de mise sous tension 1 restent posés par leur partie inférieure 5 sur les pistons 3 des étages supérieurs des tendeurs hydrauliques.

Les opérations nécessaires pour l'ouverture du couvercle de cuve se font bien entendu de la même manière mais dans un ordre inverse.

Grâce à la structure particulière du dispositif de l'invention et notamment par la combinaison des moyens d'entraînement coopérant avec le filetage externe de l'écrou supérieur et des moyens de blocage et de support de l'extrémité de la broche 12 se trouvant dans l'axe du goujon, on voit que le poids du goujon est totalement compensé lors des opérations de vissage et de dévissage de l'écrou supérieur 1 de sorte qu'aucune contrainte n'est exercée sur le filetage de cet écrou et aucun frottement n'existe entre l'écrou supérieur 1 et le piston du dernier étage du tendeur hydraulique. Par ailleurs, le couple de freinage du moto-réducteur d'entraînement permet le dévissage automatique de l'écrou supérieur lors du vissage du goujon sans l'adjonction d'autres moyens. De la même manière le couple de freinage du moto-réducteur permet le vissage automatique de l'écrou supérieur lors du dévissage du goujon, le filetage de la partie du goujon implantée dans la cuve ayant le même pas que le filetage de la partie du goujon coopérant avec l'écrou supérieur.

## Revendications

1. Dispositif automatique de vissage ou de dévissage d'un écrou (1) supérieur de mise sous tension sur un goujon de fixation (2), par action sur la périphérie externe (8) de l'écrou, caractérisé par le fait qu'il comprend des moyens de blocage en rotation (11) et de support (13) du goujon (2) permettant de compenser le poids du goujon lors du vissage ou du dévissage de l'écrou (1) et au moins un galet (31) d'entraînement de l'écrou (1), ce galet pouvant être entraîné en rotation et étant muni sur sa périphérie de gorges cylindriques de même pas et de même profil qu'un filetage pratiqué à la périphérie externe de l'écrou, ledit galet pouvant être déplacé entre une position où il entre en contact avec ledit filetage et une position hors contact.

2. Dispositif selon la revendication 1, caractérisé par le fait que le galet d'entraînement (31) est monté de façon à pouvoir se déplacer radialement par rapport à l'écrou pour entrer en contact avec la périphérie de l'écrou ou s'en éloigner.

3. Dispositif selon les revendications 1 ou 2, caractérisé par le fait qu'il comprend deux galets d'entraînement (31) diamétralement opposés par rapport à l'écrou (1) et montés sur des bras (27, 28) articulés autour d'axes (25, 26) solidaires du bâti (16) du dispositif sous l'action d'un vérin pneumatique (32) relié aux extrémités desdits bras opposées à celles qui portent les galets (31).

4. Dispositif selon la revendication 3, caractérisé par le fait que les deux galets (31) sont entraînés en rotation dans le même sens par l'intermédiaire de deux courroies crantées (34, 35) passant chacune respectivement sur une poulie crantée (23, 24) montée sur l'axe de pivotement du bras portant le galet d'entraînement correspondant, les deux galets d'entraînement précités pouvant être freinés en rotation.

5. Dispositif selon l'une quelconque des revendications précédentes, caractérisé par le fait que les moyens d'entraînement en rotation des galets précités sont montés sur une platine-support (18) disposée au-dessus de la tête du goujon (2), chaque galet (31) étant monté à l'extrémité d'une colonne rotative (29, 30).

6. Dispositif selon les revendications 4 ou 5, caractérisé par le fait que les galets (31) sont entraînés par l'intermédiaire d'un moto-réducteur (19) muni d'un frein, ledit frein permettant le vissage automatique de l'écrou (1) lors du dévissage du goujon (2).

7. Dispositif selon l'une quelconque des revendications précédentes, caractérisé par le fait que les moyens de blocage et de support comprennent une broche (12) dont l'extrémité porte un dispositif de préhension coopérant avec la tête du goujon.

8. Dispositif selon la revendication 7, caractérisé par le fait que ladite broche (12) présente une partie cannelée (11) coopérant avec des cannelures correspondantes pratiquées sur la tête (9) du goujon.

9. Ecrou destiné à être vissé sur un goujon de fixation, adapté pour coopérer avec un dispositif automatique de vissage ou de dévissage selon l'une quelconque des revendications précédentes, caractérisé par le fait qu'il comprend une jupe cylindrique supérieure (7) de diamètre interne supérieur au diamètre externe de la tête (9) du goujon et munie d'un filetage sur toute la hauteur de sa périphérie extérieure (8) et une partie inférieure (5) munie d'un filetage interne (6) de même pas que le filetage externe de la jupe et destiné à coopérer avec une portion filetée de la tête de goujon.

10. Procédé de mise en place d'un goujon de fixation du couvercle d'une cuve de réacteur nucléaire comportant un écrou supérieur (1) de mise sous tension vissé sur une portion filetée de la tête du goujon (2), caractérisé par le fait que lors du vissage du goujon dans la cuve on soutient le goujon axialement pour compenser son poids et simultanement on immobilise l'écrou supérieur de mise sous tension ce qui provoque son dévissage, l'écrou restant maintenu par l'extrémité non filetée de la tête du goujon; puis on entraîne en rotation l'écrou supérieur de façon à le revisser sur la portion filetée de la tête du goujon tout en soutenant le goujon axialement pour compenser son poids.

11. Procédé selon la revendication 10, caractérisé par le fait que pendant l'opération de dévissage du goujon on immobilise l'écrou supérieur de mise sous tension ce qui provoque son vissage.

**Patentansprüche**

1. Automatische Vorrichtung zum Aufschrauben oder Lösen einer oberen Spannmutter (1) auf einem Befestigungsbolzen (2) durch Einwirken auf den äußeren Umfang (8) der Mutter, dadurch gekennzeichnet, daß eine Einrichtung (11) zum Sperren der Drehbewegung und zum Tragen (13) des Bolzens (2) vorgesehen ist, mit der das Gewicht des Bolzens beim Aufschrauben oder Lösen der Mutter (1) kompensierbar ist, sowie mindestens eine die Mutter (1) antreibende Rolle (31), die in Drehung versetzbar ist und an ihrem Umfang zylindrische Nuten gleicher Ganghöhe und gleichen Profils wie ein Gewinde aufweist, das am äußeren Umfang der Mutter angebracht ist, und daß die Rolle (31) zwischen einer Position, in der sie das genannte Gewinde berührt und einer Position, in der keine Berührung stattfindet, verstellbar ist.

2. Vorrichtung nach Anspruch 1, dadurch gekennzeichnet, daß die Antriebsrolle (31) so angeordnet ist, daß eine Verlagerung gegenüber der Mutter in radialer Richtung möglich ist, um die Umfangsfläche der Mutter zu berühren oder sich von ihr zu entfernen.

3. Vorrichtung nach den Ansprüchen 1 oder 2, dadurch gekennzeichnet, daß zwei bezüglich der Mutter (1) diametral einander gegenüberliegende Antriebsrollen (31) vorgesehen sind, die an Armen (27, 28) angebracht sind, die um mit dem Rahmen (16) der Vorrichtung fest verbundene Achsen (25, 26) unter der Wirkung eines Druckluftzylinders (32) verschwenkbar sind, der mit den Enden der Arme (27, 28) verbunden ist, die den die Rollen (31) tragenden Enden gegenüberliegen.

4. Vorrichtung nach Anspruch 3, dadurch gekennzeichnet, daß die beiden Rollen (31) zur Drehung in gleicher Richtung durch zwei Zahnriemen (32, 33) angetrieben werden, die jeweils über eine Zahnriemenscheibe (23, 24) laufen, die auf der Schwenkachse des Arms angebracht sind, der die entsprechende Antriebsrolle trägt, und daß die Drehung der beiden Antriebsrollen abbremsbar ist.

5. Vorrichtung nach einem der vorhergehenden Ansprüche, dadurch gekennzeichnet, daß die Einrichtung für den Drehantrieb der genannten Rollen auf einer Tragplatte (18) oberhalb des Kopfes des Bolzens (2) angeordnet ist, und daß jede Rolle (31) am Ende einer sich drehenden Säule (29, 30) angebracht ist.

6. Vorrichtung nach Anspruch 4 oder 5, dadurch gekennzeichnet, daß die Rollen (31) von einem Getriebemotor (19) angetrieben werden, der eine Bremse besitzt, die das automatische Aufschrauben der Mutter (1) beim Herausschrauben des Bolzens (2) ermöglicht.

7. Vorrichtung nach einem der vorhergehenden Ansprüche, dadurch gekennzeichnet, daß die Einrichtung zum Sperren und zum Tragen eine Spindel (12) aufweist, an deren Ende sich eine Greifeinrichtung befindet, die mit dem Kopf des Bolzens (2) zusammenwirkt.

8. Vorrichtung nach Anspruch 7, dadurch gekennzeichnet, daß die Spindel (12) einen Abschnitt mit Nuten (11) aufweist, die mit entsprechenden Nuten an dem Kopf (9) des Bolzens (2) zusammenwirken.

9. Mutter zum Aufschrauben auf einen Befestigungsbolzen, eingerichtet zum Zusammenwirken mit einer automatischen Vorrichtung zum Aufschrauben oder Lösen nach einem der vorhergehenden Ansprüche, dadurch gekennzeichnet, daß sie einen oberen zylindrischen Mantel (7) aufweist, dessen Innendurchmesser größer ist als der Außendurchmesser des Kopfs (9) des Bolzens (2), sowie ein Gewinde (8) über die gesamte Höhe des äußeren Umfangs sowie einen unteren Abschnitt (5) mit einem Innengewinde (6) von gleicher Ganghöhe wie das Außengewinde des Mantels zum Zusammenwirken mit einem Gewindeabschnitt am Kopf des Bolzens.

10. Verfahren zum Anbringen eines Befestigungsbolzens für den Deckel eines Kernreaktorbehälters, wobei auf einen Gewindeabschnitt des Kopfs des Bolzens (2) eine obere Spannmutter (1) geschraubt ist, dadurch gekennzeichnet, daß der Bolzen beim Festschrauben an dem Behälter zur Kompensation seines Gewichts axial gehalten wird, und daß gleichzeitig die obere Spannmutter festgehalten wird, wodurch die Mutter abgeschraubt und von dem gewindefreien Ende des Bolzenkopfs gehalten wird, und daß dann die obere Mutter in der Weise in Drehung versetzt wird, daß sie sich wieder auf den Gewindeteil des Bolzenkopfs schraubt, wobei der Bolzen zur Kompensation seines Gewichts axial gehalten wird.

11. Verfahren nach Anspruch 10, dadurch gekennzeichnet, daß während des Herausschraubens des Bolzens die obere Spannmutter festgehalten wird, wodurch sie aufgeschraubt wird.

## Claims

1. Automatic device for screwing on or out an upper tightening nut (1) on a fastening stud (2) by exerting an action on the outer periphery (8) of the nut, characterized by the fact that it comprises means (11, 13) for locking the stud against rotation and supporting the stud (2), which permit of compensating the stud weight during the screwing or unscrewing steps of the nut (1) and at least one roller (31) for driving the nut (1), said roller being rotatably driven and provided on its periphery with cylindrical grooves of same pitch and same profile as threads formed on the outer periphery of the nut, said roller being adapted to be moved from a position in which it engages said threads and a position in which it is spaced therefrom.

2. The device according to claim 1, characterized by the fact that the driving roller (31) is mounted for radial movement in relation to the nut for engagement with or disengagement from the nut periphery.

3. The device according to claims 1 or 2, characterized by the fact that it comprises two driving rollers (31) diametrally opposed in relation to the nut (1) and mounted on arms (27, 28) fulcrumed to pivot pins (25, 26) rigid with the frame structure (16) of the device, said arms being responsive to a pneumatic cylinder (32) connected to the ends of said which are opposite those carrying said rollers (31).

4. The device according to claim 3, characterized by the fact that the two rollers (31) are rotatably driven in the same direction by means of a pair of cogged belts (34, 35) passing each around a matching toothed pulley (23, 24) mounted to the pivot pin of the arm supporting the corresponding driving roller, both driving rollers being adapted to be braked during their rotation.

5. The device according to any of the preceding claims, characterized by the fact that the means for rotatably driving said rollers are mounted on a supporting plate (18) overlying the head of said stud (2), each roller (31) being mounted to the end of a rotary shaft (29, 30).

6. The device of claims 4 or 5, characterized by the fact that the rollers (31) are driven by means of a motor and reduction-gear unit (19) provided with brake means, said brake means permitting the automatic screwing of the nut (1) during the unscrewing of said stud (2).

7. The device according to any of the preceding claims, characterized by the fact that the locking and support means comprise a shaft (12) provided at one end with gripping means cooperating with the stud head.

8. The device of claim 7, characterized by the fact that said shaft (12) comprises a splined portion (11) cooperating with corresponding splines carried by the stud head (19).

9. A nut adapted to be screwed on a fastening stud, for cooperation with an automatic screwing or unscrewing device according to any of the preceding claims, characterized by the fact that it comprises an upper cylindrical skirt (17) having an inner diameter greater than the outer diameter of the stud head (9) and provided with screw-threads throughout the height of its outer periphery (8) and a lower portion (5) provided with internal screw-threads (6) of same pitch as the outer screw-threads of said skirt and adapted to cooperate with a screw-threaded portion of said stud head.

10. A method of fitting a stud for fastening the cover of a nuclear reactor pit comprising a top tightening nut (1) screwed on a screw-threaded portion of the stud head (2), characterized by the fact that when screwing the stud in the pit the stud is supported in the axial direction to compensate its weight and simultaneously the top nut is locked against rotation so as to cause the unscrewing thereof, said nut being retained by the plain portion of the stud head, whereafter the top nut is rotatably driven in order to re-screw same on the screw-threaded portion of the stud head while supporting the stud in the axial direction to compensate its weight.

11. The method of claim 10, characterized by the fact that during the stud unscrewing operation the top tightening nut is locked against rotation in order to cause the screwing thereof.

## FIG.1

FIG.2